# EUROPÄISCHE PATENTSCHRIFT

(11) **EP 2 748 495 B1**
(45) Veröffentlichungstag und Bekanntmachung des Hinweises auf die Patenterteilung: **16.03.2016**
(21) Anmeldenummer: 12743390.2
(22) Anmeldetag: 02.08.2012
(51) Int. Cl.: F16J 15/34

(54) **GEKÜHLTE GLEITRINGDICHTUNGSANORDNUNG**
COOLED SLIDING RING SEAL ARRANGEMENT
SYSTÈME D'ÉTANCHÉITÉ À BAGUES DE GLISSEMENT REFROIDI

(30) Priorität: 24.08.2011 DE 102011111697
(43) Veröffentlichungstag der Anmeldung: 02.07.2014
(73) Patentinhaber: EagleBurgmann Germany GmbH & Co. KG, 82515 Wolfratshausen (DE)
(72) Erfinder: PORTENLÄNGER, Josef, 82544 Endlhausen (DE); DÖRIG, Michael, 80634 München (DE)
(74) Vertreter: Hoefer & Partner Patentanwälte mbB
(86) Internationale Anmeldenummer: PCT/EP2012/003301
(87) Internationale Veröffentlichungsnummer: WO 2013/026526

(56) Entgegenhaltungen:
- DE-A1- 10 223 639
- DE-U1- 9 105 482
- JP-A- 2009 108 941
- US-A- 5 713 576
- US-A1- 2009 140 494

## Beschreibung

Die vorliegende Erfindung betrifft eine fluidgekühlte Gleitringdichtungsanordnung, welche insbesondere als trockenlaufende Gleitringdichtung ausgebildet ist sowie ein Verfahren zur Optimierung eines Wärmetransports der Gleitringdichtungsanordnung.

Gleitringdichtungsanordnungen sind aus dem Stand der Technik in unterschiedlichen Ausgestaltungen bekannt. Beispielsweise werden bei Rührwerken gasgeschmierte Gleitringdichtungen verwendet, bei welchen als sog. Trockenlaufdichtung ein Gas, insbesondere Luft, zwischen einem rotierenden Gleitring und einem stationären Gleitring vorhanden ist. Derartige Gleitringdichtungsanordnungen können sowohl berührend als auch mit Dichtspalt gefahren werden. Im Betrieb kann es bei derartigen Gleitringdichtungen zu Wärmeproblemen und zur Erzeugung von unerwünschten Geräuschen kommen. Aus der JP 2009-108941 A1 ist eine Gleitringdichtung bekannt, bei der in einem rotierenden Gleitring ein Gasdurchgangskanal gebildet ist, welcher bis zu den Gleitflächen am Dichtspalt durch den Gleitring hindurchgeführt ist. Diese Lösung bedingt jedoch radiale und axiale Bohrungen und Ausfräsungen im Gleitring selbst und ist dadurch sehr komplex und teuer. Ferner wird durch die Kanäle eine Schwächung der Gleitringe bewirkt, was insbesondere in Abhängigkeit von einem abzudichtenden Druck zu Verwerfungen an den Gleitringen und letztendlich zu einer kurzen Lebensdauer der Gleitringe führen kann.

Es ist daher Aufgabe der vorliegenden Erfindung, eine Gleitringdichtungsanordnung bereitzustellen, welche bei einfachem Aufbau und kostengünstiger Herstellbarkeit eine verbesserte Kühlung mittels eines Fluids, insbesondere Gas, ermöglicht, und insbesondere eine energiesparende und bauraumoptimierte Kühlung ermöglicht.

Diese Aufgabe wird durch eine Gleitringdichtungsanordnung mit den Merkmalen des Anspruches 1 gelöst. Die Unteransprüche zeigen bevorzugte Weiterbildungen der Erfindung.

Die erfindungsgemässe Gleitringdichtungsanordnung mit den Merkmalen des Anspruches 1 weist im Vergleich mit dem Stand der Technik eine signifikante verbesserte Lebensdauer auf. Ferner kann eine effektivere Kühlung der Gleitringe ermöglicht werden. Ferner kann die erfindungsgemässe Gleitringdichtungsanordnung einen unerwünschten Druckaufbau zwischen einem rotierenden Gleitring und einem Trägerring effektiv verhindern. Darüber hinaus benötigt die Kühlung keinen zusätzlichen Bauraum. Dies wird erfindungsgemäss dadurch erreicht, dass in einem an einer Wellenbuchse befestigten Trägerring wenigstens eine Verbindungsöffnung zu einem Zwischenraum zwischen dem rotierenden Gleitring und dem Trägerring vorhanden ist. Der Zwischenraum ist durch zwei O-Ringe, welche zwischen der Innenseite des Trägerringes und der Aussenseite des rotierenden Gleitringes angeordnet sind, in ringförmiger Weise gebildet. Durch die Verbindungsöffnung im Trägerring kann eine Zu- und Abströmung, insbesondere eine Be- und Entlüftung, des Zwischenraumes und dadurch eine effektive Kühlung des rotierenden Gleitringes ermöglicht werden. Ferner kann sich im Zwischenraum kein unerwünschter Druckanstieg ausbilden, da der Zwischenraum über die Verbindungsöffnung mit der Aussenmantelfläche des Trägerringes (Atmosphärenseite) verbunden ist. Durch die Rotation des Trägerringes gemeinsam mit dem rotierenden Gleitring wird über die Verbindungsöffnung eine Fluidzirkulation an der radialen äusseren Mantelfläche des rotierenden Gleitringes erzeugt, so dass dieser effektiv gekühlt werden kann. Somit kann über den sich ausbildenden Fluidstrom Wärme abgeführt werden. Ein besonderer Vorteil der erfindungsgemässen Lösung liegt ferner darin, dass die Wärmeentwicklung an den Gleitringen im Wesentlichen von der Drehzahl abhängig ist. Da die Kühlungsleistung jedoch ebenfalls mit der Drehzahl zunimmt, kann automatisch eine drehzahlabhängige Kühlung der Gleitringdichtungsanordnung ermöglicht werden.

Vorzugsweise weist der Trägerring eine Vielzahl von Verbindungsöffnungen auf. Diese sind insbesondere bevorzugt am Umfang gleich verteilt angeordnet. Hierdurch kann die Kühlungsleistung durch den rotierenden Trägerring effektiv verbessert werden. Die Form der Verbindungsöffnungen ist dabei vorzugsweise zylindrisch mit gleichen oder unterschiedlichen Durchmessern und/oder sich verjüngend, insbesondere sich konisch verjüngend, und/oder stufenförmig (Stufenbohrungen) und/oder als Langlöcher ausgebildet. Besonders bevorzugt sind die Verbindungsöffnungen dabei auf einer kreisförmigen Umfangslinie am Trägerring angeordnet. Alternativ sind die Verbindungsöffnungen auf verschiedenen Ebenen am Trägerring vorgesehen.

Eine besonders effektive Kühlung wird erreicht, wenn vorzugsweise eine Mittelachse der Verbindungsöffnungen in einem Winkel kleiner als 90° zu einer Tangentialen an einem Aussenumfang des Trägerringes angeordnet sind. Der Winkel ist vorzugsweise in einem Bereich von 45° bis 65° und beträgt besonders bevorzugt ungefähr 55° zur Tangentialen am Trägerring. Alternativ sind die Verbindungsöffnungen in einem Winkel zwischen 90° und 170° angeordnet. Weiter bevorzugt sind alle Verbindungsöffnungen in einem gleichen Winkel auch in eine gleiche Richtung ausgerichtet, so dass sich eine bevorzugte Drehrichtung ergibt.

Besonders bevorzugt sind zwei zueinander benachbarte Verbindungsöffnungen jeweils derart angeordnet, dass Mittelachsen der benachbarten Verbindungsöffnungen einen Winkel von ca. 90° bilden. Hierdurch kann eine drehrichtungsunabhängige, effektive Kühlung erreicht werden, da sowohl für einen Linkslauf als auch für einen Rechtslauf jeweils Verbindungsöffnungen in einem Winkel entgegen der Laufrichtung vorgesehen sind. Hierdurch ist insbesondere eine Verwendung der Gleitringdichtungsanordnung in Rührwerken, bei denen ein Links- und Rechtslauf auftreten kann, möglich. Weiter bevorzugt schneiden sich zueinander benachbarte Verbindungsöffnungen an einem Innenumfang des Trägerringes. Hierdurch wird eine besonders effektive Strömungsführung im Zwischenraum zwischen dem Trägerring und dem rotierenden Gleitring ermöglicht.

Weiter bevorzugt weist der Trägerring eine Nut auf, welche an einer Aussenmantelfläche des Trägerringes vorgesehen ist und die Verbindungsöffnungen miteinander verbindet. Hierdurch wird eine Führung eines Gasstromes an der Aussenseite des Trägerringes bewirkt. Die Nut ist vorzugsweise V-förmig, insbesondere mit einem Winkel von ungefähr 90°, ausgebildet. Bevorzugt ist die Nut umlaufend auf einer Ebene des Trägerrings vorgesehen. Alternativ verbindet die Nut Verbindungsöffnungen auf unterschiedlichen Ebenen des Trägerrings in Zick-Zack-Form.

Für einen besonders kompakten Aufbau weist der Trägerring bevorzugt ferner Befestigungsöffnungen zur Aufnahme von Befestigungselementen auf, mit denen der Trägerring an der Wellenbuchse fixiert ist.

Besonders bevorzugt umfasst die Gleitringdichtungsanordnung ferner einen Klemmring, welcher radial innerhalb der Wellenbuchse angeordnet ist. Der Klemmring wird vorzugsweise durch die durch die Befestigungsöffnungen im Trägerring hindurchgeführten Befestigungselemente an einem rotierenden Bauteil, wie z.B. einer Welle, fixiert.

Ferner umfasst die erfindungsgemässe Gleitringdichtungsanordnung weiter bevorzugt eine Vorspanneinrichtung, welche am rotierenden Gleitring angeordnet ist und den rotierenden Gleitring gegenüber dem stationären Gleitring vorspannt. Hierdurch wird ein minimaler Dichtspalt zwischen den beiden Gleitringen sichergestellt. Alternativ kann auch ein Vorsprung bei sich berührenden Gleitringen durch die Vorspanneinrichtung vorgesehen werden.

Für eine besonders kompakte und einfache Montage ist vorzugsweise der Trägerring in einer Axialrichtung der Gleitringdichtungsanordnung länger als die Wellenbuchse. Weiter bevorzugt bilden die Gleitringe, die Wellenbuchse, der Trägerring und die beiden O-Ringe eine vormontierbare Baugruppe. Hiermit ist einerseits eine schnelle Montage der Gleitringdichtungsanordnung möglich, wobei besonders bevorzugt der stationäre Gleitring an einem Flansch oder dgl. angeordnet ist.

Weiter bevorzugt weist der Trägerring einen zu einer durch eine Mittelachse verlaufenden Ebene symmetrischen Aufbau auf. Hierdurch kann insbesondere eine Montage des Trägerringes fehlerfrei erfolgen.

Als Medium für die Kühlung kann eine Flüssigkeit oder ein Gas, insbesondere Luft, oder ein Gas-/ Flüssigkeitsgemisch verwendet werden.

Die erfindungsgemässe Gleitringdichtungsanordnung wird besonders bevorzugt bei Rührwerken oder dgl. verwendet.

Weiterhin betrifft die vorliegende Erfindung ein Verfahren zur Verwendung einer derartigen Gleitringdichtungsanordnung. Gemäß einer bevorzugten Ausführung ist das rotierende Teil, nämlich der rotierende Gleitring einer Gleitringdichtung mittels eines hülsenartigen Elements thermisch gekammert, wobei das hülsenartige Element mit dem rotierenden Teil mitrotiert. Ein zwischen dem rotierenden Teil und dem hülsenartigen Element befindliches Fluid wird dabei bewegt, um den Wärmetransport auszuführen und eine Welligkeit, insbesondere am Dichtspalt zwischen den Gleitringen, zu optimieren. Somit kann gezielt eine Zufuhr und/oder Abfuhr von Wärme zum/vom rotierenden Teil der Gleitringdichtungsanordnung erfolgen, so dass insbesondere eine unerwünschte Welligkeit der Gleitringe vermieden werden kann. Besonders bevorzugt wird das Fluid ausschließlich durch den Rotationsvorgang bewegt. Hierdurch kann insbesondere auf das Vorsehen von separat angetriebenen Bauteilen zur Bewegung des Fluids verzichtet werden. Besonders bevorzugt ist der Wärmetransport durch eine Variation des Strömungswegs für das Fluid gezielt beeinflussbar. Besonders bevorzugt erfolgt der Wärmetransport dabei durch Öffnungen und/oder Schlitze im hülsenartigen Bauteil. Hierbei kann insbesondere durch Wahl der geometrischen Form der Öffnungen/Schlitze eine gezielte Beeinflussung des Wärmetransportes am rotierenden Teil der Gleitringdichtung erreicht werden. Insbesondere kann dadurch auch eine Welligkeit der Gleitringe gezielt eingestellt werden.

Nachfolgend wird unter Bezugnahme auf die begleitende Zeichnung ein Ausführungsbeispiel einer erfindungsgemässen Gleitringdichtungsanordnung im Detail beschrieben. In der Zeichnung ist:
- Fig. 1: eine schematische, perspektivische Ansicht einer Gleitringdichtungsanordnung gemäss einem ersten Ausführungsbeispiel der Erfindung,
- Fig. 2: eine schematische, teilweise geschnittene Ansicht von Fig. 1,
- Fig. 3: eine perspektivische Ansicht eines Trägerringes von Fig. 1,
- Fig. 4: eine schematische Schnittansicht des Trägerringes von Fig. 3,
- Fig. 5: eine schematische Schnittansicht des Trägerringes entlang der Linie V-V von Fig. 4,
- Fig. 6: eine schematische Schnittansicht der Gleitringdichtungsanordnung, und
- Fig. 7: eine schematische, perspektivische Ansicht einer Gleitringdichtungsanordnung gemäss einem zweiten Ausführungsbeispiel der Erfindung.

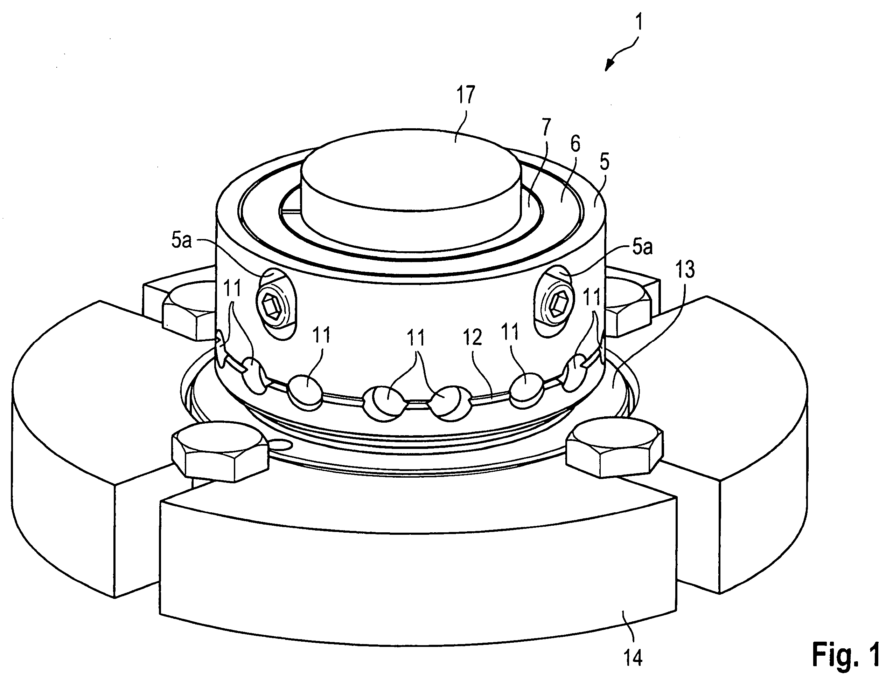

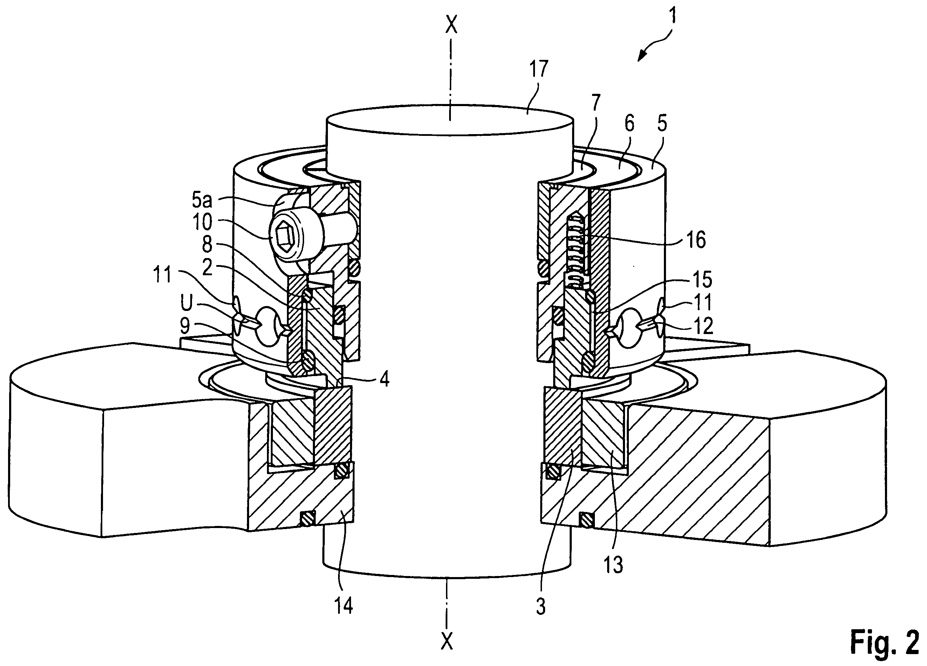

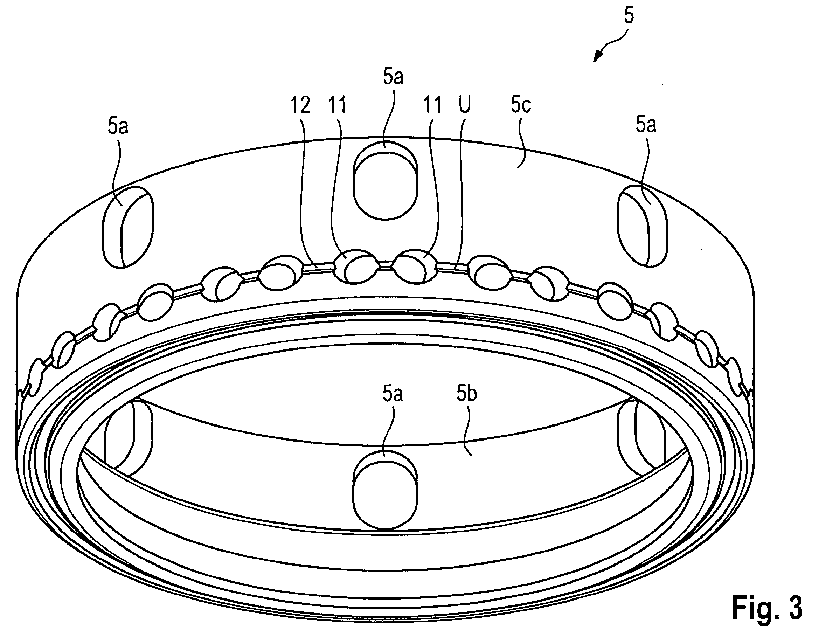

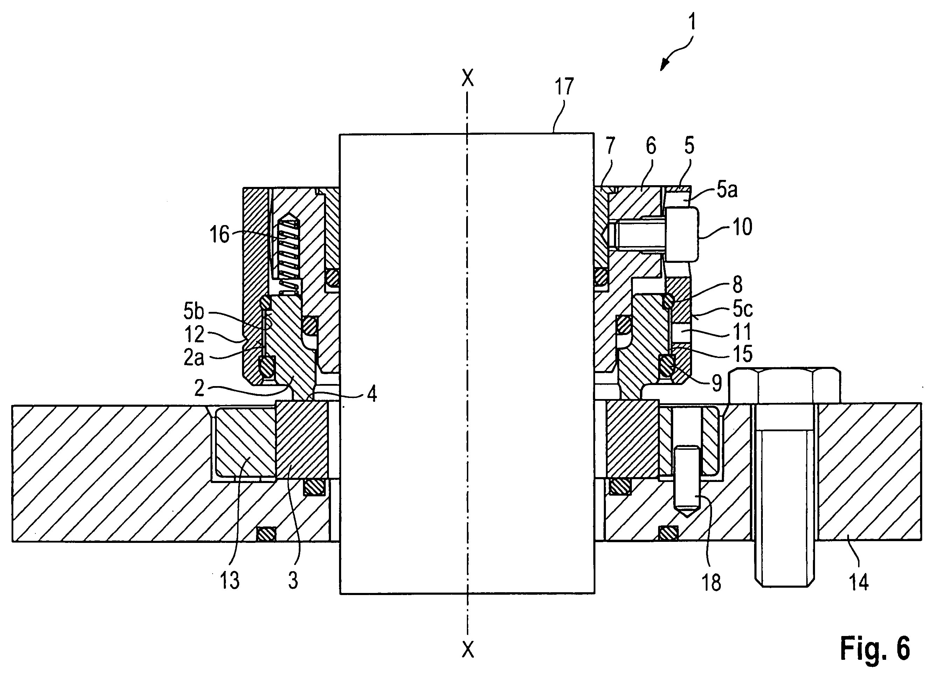

Wie aus den Fig. 1 bis 6 ersichtlich ist, umfasst die Gleitringdichtungsanordnung 1 gemäss dem ersten Ausführungsbeispiel der vorliegenden Erfindung einen rotierenden Gleitring 2 und einen stationären Gleitring 3, welche zwischen sich einen Dichtspalt 4 definieren. Der rotierende Gleitring 2 rotiert in diesem Ausführungsbeispiel mit einer Welle 17 als rotierendem Bauteil. Der rotierende Gleitring 2 ist an einer Wellenbuchse 6 angeordnet, welche über einen Klemmring 7 geschoben ist. Ferner ist ein Trägerring 5 vorgesehen, welche mehrere Langlöcher 5a aufweist, die als durchgehende Öffnungen vorgesehen sind und jeweils ein Befestigungselement 10 aufnehmen. Mittels der Befestigungselemente 10 wird die Wellenbuchse 6 am Klemmring 7 fixiert, und der Klemmring auf die Welle 17 geklemmt. Somit rotieren der Klemmring 7, die Wellenbuchse 6, der rotierende Gleitring 2 und der Trägerring 5 gemeinsam miteinander. In Aussparungen in der Wellenbuchse 6 sind ferner entlang des Umfanges gleich verteilte Vorspanneinrichtungen 16 zur Vorspannung des rotierenden Gleitringes 2 gegenüber dem stationären Gleitring 3 vorgesehen.

Der stationäre Gleitring 3 ist von einem Haltering 13 umgeben und gehalten, wobei der Haltering 13 mittels Wurmschrauben 18 oder einer anderen formschlüssigen Verbindung in einem Flansch 14 fixiert sind.

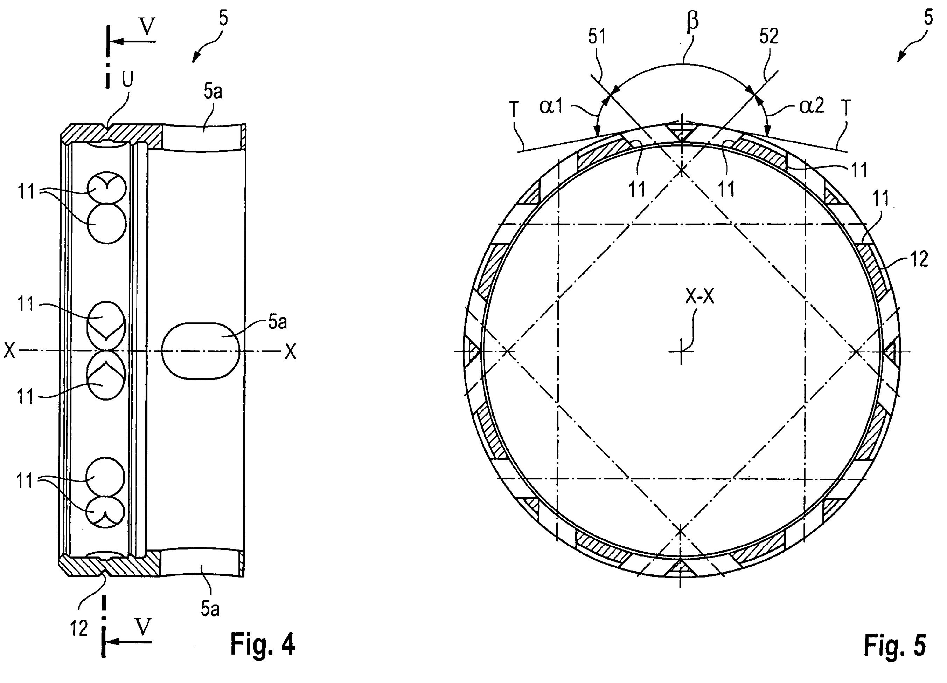

Weiterhin ist an einer zu einer Mittelachse X-X radialen äusseren Mantelfläche 2a des rotierenden Gleitringes 2 und einer inneren Mantelfläche 5b des Trägerringes 5 ein ringförmiger Zwischenraum 15 vorgesehen. Der ringförmige Zwischenraum 15 wird durch einen ersten O-Ring 8 und einen zweiten O-Ring 9 zwischen dem Trägerring 5 und dem rotierenden Gleitring 2 definiert. Der erste O-Ring 8 und der zweite O-Ring 9 sind dabei in radialer Richtung zur Mittelachse X-X zwischen dem rotierenden Gleitring 2 und dem Trägerring 5 angeordnet. Hierbei können im rotierenden Gleitring 2 und/oder im Trägerring 5 jeweils Ausnehmungen für den ersten und zweiten O-Ring 8, 9 vorgesehen sein. Weiterhin ist im Trägerring 5 eine Vielzahl von Verbindungsöffnungen 11 gebildet. Die Verbindungsöffnungen 11 sind im Detail aus den Fig. 4 und 5 ersichtlich. Die Verbindungsöffnungen 11 verbinden dabei den Zwischenraum 15 mit einer Aussenmantelfläche 5c am Trägerring 5.

Wie insbesondere aus Fig. 5 ersichtlich ist, weist der Trägerring 5 dieses Ausführungsbeispiels insgesamt sechzehn Verbindungsöffnungen 11 auf. Dabei sind die Verbindungsöffnungen 11 als zylindrische Bohrungen vorgesehen, deren Mittelpunkte jeweils auf einer gemeinsamen Umfangslinie U in einer Ebene am Trägerring angeordnet sind. An dieser Umfangslinie U ist am Aussenumfang des Trägerringes 5 ferner eine umlaufende Nut 12 gebildet, welche in diesem Ausführungsbeispiel V-förmig mit einem Winkel von ca. 90° gebildet ist. Wie insbesondere aus Fig. 4 ersichtlich ist, sind die Verbindungsöffnungen 11 derart angeordnet, dass jeweils Paare von Verbindungsöffnungen 11 nahe nebeneinander angebracht sind. Dabei sind die Verbindungsöffnungen 11 derart vorgesehen, dass sie jeweils mit einer Tangente T an der Mittelachse 51, 52 einen Winkel bilden, welcher kleiner als 90° ist. In diesem Ausführungsbeispiel sind in Fig. 5 zwei Winkel zweier benachbarter Verbindungsöffnungen 11 exemplarisch eingezeichnet, wobei bei der ersten Verbindungsöffnung 11 der Winkel α1 ist und bei der zweiten Verbindungsöffnung 11 der Winkel α2 ist. Die Winkel sind dabei gleich gross, jedoch ist ihr Vorzeichen verschieden. Die jeweils unmittelbar benachbarten Verbindungsöffnungen 11 sind ferner derart eingebracht, dass eine Mittelachse 51 einer der Verbindungsöffnungen in einem Winkel β von ungefähr 90° zu einer Mittelachse 52 der benachbarten Verbindungsöffnung 11 vorgesehen ist.

Diese paarweise Anordnung der Verbindungsöffnungen 11 in einander entgegengesetzten Richtungen am Trägerring 5 weist den grossen Vorteil auf, dass dadurch eine drehrichtungsunabhängige Kühlung des rotierenden Gleitringes 2 durch in die Verbindungsöffnungen 11 einströmendes und ausströmendes Fluid erhalten wird. Mit anderen Worten kann die Rotationsrichtung der Gleitringdichtungsanordnung nun beliebig gewählt werden, wobei immer die gleiche Kühlungswirkung erreicht wird.

Die Verbindungsöffnungen 11 bewirken, dass bei einer Rotation des Trägerringes 5 Fluid durch die Verbindungsöffnungen 11 in den Zwischenraum 15 einströmen kann, Wärme im Zwischenraum vom rotierenden Gleitring 2 aufnehmen kann und über andere Verbindungsöffnungen 11 vom Zwischenraum 15 weg transportiert werden kann. Da üblicherweise bei steigenden Drehzahlen mehr Wärme im Bereich des Dichtspaltes 4 zwischen den beiden Gleitringen erzeugt wird, kann durch die erfindungsgemässe Luftströmung durch die Verbindungsöffnungen 11 und den Zwischenraum 15 eine mit steigenden Drehzahlen ebenfalls vergrösserte Kühlungsleistung bereitgestellt werden. Ferner kann durch die Verbindungsöffnungen 11 ein Druckausgleich, insbesondere eine Entlüftung, des Zwischenraumes zwischen dem rotierenden Gleitring 2 und dem Trägerring 5 ermöglicht werden. Somit kann sich in dem Zwischenraum 15 zwischen den beiden O-Ringen 8, 9 kein Druck aufbauen, so dass keine Gefahr besteht, dass der rotierende Gleitring 2 durch einen derartigen Druck zu Verwerfungen neigt, was die Lebensdauer der Gleitringdichtungsanordnung signifikant reduzieren würde. Ferner kann eine Leckage aufgrund von Verwerfungen der Gleitringe vermieden werden.

Die am Aussenumfang des Trägerringes 5 eingebrachte Nut 12 bewirkt eine Führung des Fluids und führt zu einer verbesserten Einströmung des Fluids in die Verbindungsöffnungen 11 bzw. einer verbesserten Abströmung aus den Verbindungsöffnungen 11.

Erfindungsgemäss wird somit eine verbesserte Kühlung des rotierenden Gleitringes 2 bereitgestellt, wodurch ein Verschleiss an der Gleitringdichtung gemindert und die Lebensdauer erhöht wird. Dadurch werden ferner auch Verluste bei der Reibleistung und in einem Antrieb gemindert. Weiterhin können dadurch beispielsweise Serviceintervalle für die Gleitringe verlängert werden und die erfindungsgemässe Gleitringdichtungsanordnung bei erhöhten Anforderungen hinsichtlich Produkttemperatur und Drehzahlen eingesetzt werden.

Der rotierende Gleitring 2, der Trägerring 5, die Wellenbuchse 6, der Klemmring 7, der erste O-Ring 8 und der zweite O-Ring 9 bilden eine vormontierbare Baugruppe, welche durch die Befestigungselemente 10 zusammengehalten werden.

Es sei ferner angemerkt, dass die Verbindungsöffnungen 11 nicht nur zylindrisch, sondern auch mit variierenden Durchmessern und/oder in sich verjüngender Form gebildet sein können. Auch kann die Anzahl der Verbindungsöffnungen 11 beliebig gewählt werden. Weiterhin ist es möglich, die Verbindungsöffnungen 11 auch als Langlöcher auszubilden, wodurch eine weiter verbesserte Kühlung erhalten werden kann.

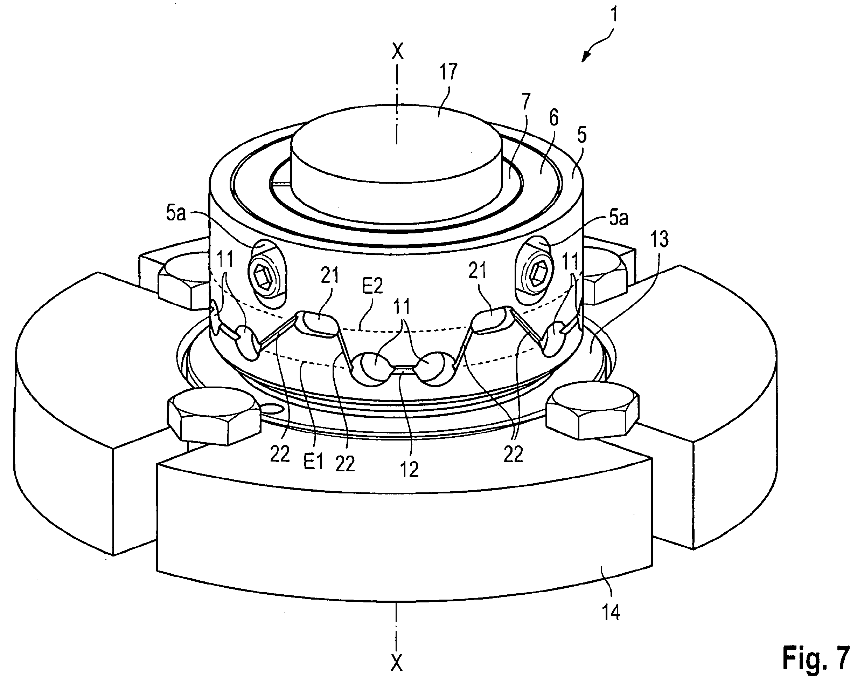

Nachfolgend wird unter Bezugnahme auf Fig. 7 eine Gleitringdichtungsanordnung 1 gemäß einem zweiten Ausführungsbeispiel beschrieben, wobei gleiche bzw. funktional gleiche Teile mit den gleichen Bezugszeichen wie im ersten Ausführungsbeispiel bezeichnet sind.

Im Unterschied zum ersten Ausführungsbeispiel sind beim zweiten Ausführungsbeispiel die Verbindungsöffnungen 11 auf einer ersten Ebene E1 und weitere Verbindungsöffnungen 21 auf einer zweiten Ebene E2 angeordnet. Die beiden Ebenen E1, E2 sind dabei zueinander parallel und senkrecht zur Mittelachse X-X der Gleitringdichtungsanordnung 1. Weiterhin sind verbindende Nuten 22 vorgesehen, welche Verbindungsöffnungen 11 der ersten Ebene E1 mit als Langloch 21 ausgebildeten Verbindungsöffnungen der zweiten Ebene E2 verbinden. Hierdurch wird erreicht, dass die Gleitringdichtungsanordnung an verschiedenen Stellen gekühlt wird. Es sei angemerkt, dass alternativ auch die Verbindungsöffnungen auf mehr als auf zwei Ebenen vorgesehen werden können und entsprechend über Nuten miteinander verbunden werden können. So kann erfindungsgemäß je nach Anwendungsfall eine individuelle Kühlung der Gleitringdichtungsanordnung ermöglicht werden.

Ansonsten entspricht dieses Ausführungsbeispiel dem vorhergehenden Ausführungsbeispiel, so dass auf die dort gegebene Beschreibung verwiesen werden kann.

Die erfindungsgemässe Gleitringdichtungsanordnung 1 wird bevorzugt in einer vertikalen Ausrichtung der Welle 17, insbesondere bei Rührwerken oder dgl., verwendet.

### Bezugszeichenliste

- 1: Gleitringdichtungsanordnung
- 2: rotierender Gleitring
- 3: stationärer Gleitring
- 4: Dichtspalt
- 5: Trägerring
- 5a: Befestigungsöffnungen
- 5b: Innenmantelfläche
- 5c: Aussenmantelfläche
- 6: Wellenbuchse
- 7: Klemmring
- 8: erster O-Ring
- 9: zweiter O-Ring
- 10: Befestigungselement
- 11: Verbindungsöffnung
- 12: Nut
- 13: Haltering
- 14: Flansch
- 15: Zwischenraum
- 16: Vorspanneinrichtung
- 17: Welle
- 18: Wurmschraube
- 21: Langloch
- 22: Nut
- 51: Mittelachse
- 52: Mittelachse
- E1, E2: Ebene
- T: Tangente

## Patentansprüche

1. Gleitringdichtungsanordnung, umfassend:
- einen rotierenden Gleitring (2) und einen stationären Gleitring (3), welche zwischen sich einen Dichtspalt (4) definieren,
- eine Wellenbuchse (6), an welcher der rotierende Gleitring (2) angeordnet ist,
- einen Trägerring (5), welcher an der Wellenbuchse (6) angeordnet ist, und den rotierenden Gleitring (2) an dessen Aussenumfang zumindest teilweise überdeckt,
- einen ersten O-Ring (8) und einen zweiten O-Ring (9), welche zwischen dem rotierenden Gleitring (2) und dem Trägerring (5) angeordnet sind und einen Zwischenraum (15) am Aussenumfang des rotierenden Gleitringes (2) zwischen dem Trägerring (5) und dem rotierenden Gleitring (2) definieren, und
- wenigstens eine Verbindungsöffnung (11), welche den Zwischenraum (15) mit einer Aussenmantelfläche (5c) des Trägerringes (5) verbindet.

2. Anordnung nach Anspruch 1, **gekennzeichnet durch** eine Vielzahl von Verbindungsöffnungen (11).

3. Anordnung nach Anspruch 2, **dadurch gekennzeichnet, dass** die Verbindungsöffnungen (11) entlang des Umfanges des Trägerringes (5) auf einer gemeinsamen Kreislinie angeordnet sind, oder dass die Verbindungsöffnungen (11) in verschiedenen Ebenen am Trägerring angeordnet sind.

4. Anordnung nach einem der vorhergehenden Ansprüche, **dadurch gekennzeichnet, dass** die Verbindungsöffnungen (11) zylindrisch mit gleichen oder unterschiedlichen Durchmessern, und/oder sich verjüngend, insbesondere sich konisch verjüngend und/oder stufenförmig und/oder als Langloch ausgebildet sind.

5. Anordnung nach einem der vorhergehenden Ansprüche, **dadurch gekennzeichnet, dass** eine Mittelachse (51,52) der Verbindungsöffnungen (11) in einem Winkel (α1, α2) kleiner als 90°, insbesondere zwischen 45° bis 65° und bevorzugt ungefähr 55°, zu einer Tangente T am Aussenumfang des Trägerringes (5) angeordnet sind.

6. Anordnung nach Anspruch 5, **dadurch gekennzeichnet, dass** die Mittelachsen (51,52) zweier benachbarter Verbindungsöffnungen einen Winkel β von ungefähr 90° definieren.

7. Anordnung nach Anspruch 6, **dadurch gekennzeichnet, dass** sich zwei benachbarte Verbindungsöffnungen (11) an einer Innenmantelfläche (5b) des Trägerringes (5) schneiden.

8. Anordnung nach einem der vorhergehenden Ansprüche, ferner umfassend eine Nut (12), welche an einer Aussenmantelfläche (5c) des Trägerringes (5) vorgesehen ist und die Verbindungsöffnungen (11) an der Aussenmantelfläche des Trägerringes (5) verbindet.

9. Anordnung nach einem der vorhergehenden Ansprüche, ferner umfassend einen Klemmring (7), welcher radial innerhalb der Wellenbuchse (6) angeordnet ist.

10. Anordnung nach einem der vorhergehenden Ansprüche, **dadurch gekennzeichnet, dass** der Trägerring (5) in Axialrichtung (X-X) länger ist als die Wellenbuchse (6).

11. Anordnung nach einem der vorhergehenden Ansprüche, **dadurch gekennzeichnet, dass** der rotierende Gleitring (2), die Wellenbuchse (6), der Trägerring (5) und der erste und zweite O-Ring (8.9) eine vormontierbare Baugruppe bilden.

12. Verfahren zur Verwendung einer Gleitringdichtungsanordnung nach einem der vorhergehenden Ansprüche.

## Claims

1. Mechanical seal arrangement, comprising:
- a rotating slide ring (2) and a stationary slide ring (3) which define a sealing gap (4) between them,
- a shaft bushing (6) on which the rotating slide ring (2) is arranged,
- a support ring (5) which is arranged on the shaft bushing (6) and covers the rotating slide ring (2) at least in part on the outer circumference thereof,
- a first O-ring (8) and a second O-ring (9) which are arranged between the rotating slide ring (2) and the support ring (5) and define an intermediate space (15) on the outer circumference of the rotating slide ring (2) between the support ring (5) and the rotating slide ring (2), and
- at least one connecting opening (11) which connects the intermediate space (15) to an outer surface (5c) of the support ring (5).

2. Arrangement according to claim 1, **characterised by** a plurality of connecting openings (11).

3. Arrangement according to claim 2, **characterised in that** the connecting openings (11) are arranged along the circumference of the support ring (5) on a shared circular line or **in that** the connecting openings (11) are arranged in different planes on the support ring.

4. Arrangement according to any of the preceding claims, **characterised in that** the connecting openings (11) are formed cylindrical with the same or different diameters and/or tapering, in particular conically tapering, and/or stepped and/or as a slot.

5. Arrangement according to any of the preceding claims, **characterised in that** a central axis (51, 52) of the connecting openings (11) is arranged at an angle (α1, α2) less than 90°, in particular between 45° and 65° and preferably approximately 55°, to a tangent T to the outer circumference of the support ring (5).

6. Arrangement according to claim 6, **characterised in that** the central axes (51, 52) of two adjacent connecting openings are at an angle β of approximately 90°.

7. Arrangement according to claim 6, **characterised in that** two adjacent connecting openings (11) intersect on an inner surface (5b) of the support ring (5).

8. Arrangement according to any of the preceding claims, further comprising a groove (12) which is provided on an outer surface (5c) of the support ring (5) and connects the connecting openings (11) on the outer on the outer surface of the support ring (5).

9. Arrangement according to any of the preceding claims, further comprising a clamp ring (7) which is arranged radially inside the shaft bushing (6).

10. Arrangement according to any of the preceding claims, **characterised in that** the support ring (5) is longer than the shaft bushing (6) in the axial direction (X-X).

11. Arrangement according to any of the preceding claims, **characterised in that** the rotating slide ring (2), the shaft bushing (6), the support ring (5) and the first and second O-ring (8, 9) form a pre-assembled module.

12. Method for using a mechanical seal arrangement according to any of the preceding claims.

## Revendications

1. Ensemble d'étanchement à bagues de glissement, comprenant :
- une bague de glissement (2) rotative et une bague de glissement (3) fixe, définissant entre elles un interstice d'étanchement (4),
- un coussinet (6) d'arbre, sur lequel ladite bague de glissement (2) rotative est implantée,
- une bague de support (5) qui est implantée sur ledit coussinet (6) de l'arbre et recouvre au moins partiellement ladite bague de glissement (2) rotative, sur le pourtour extérieur de cette dernière,
- une première bague torique (8) et une seconde bague torique (9) qui sont interposées entre la bague de glissement (2) rotative et la bague de support (5) et définissent, sur le pourtour extérieur de ladite bague de glissement (2) rotative, un espace interstitiel (15) entre ladite bague de support (5) et ladite bague de glissement (2) rotative, et
- au moins un orifice de liaison (11), reliant ledit espace interstitiel (15) à une surface (5c) de l'enveloppe extérieure de ladite bague de support (5).

2. Ensemble selon la revendication 1, **caractérisé par** une multiplicité d'orifices de liaison (11).

3. Ensemble selon la revendication 2, **caractérisé par le fait que** les orifices de liaison (11) sont disposés sur une ligne circulaire commune, le long du pourtour de la bague de support (5) ; ou que lesdits orifices de liaison (11) sont situés dans des plans différents sur ladite bague de support.

4. Ensemble selon l'une des revendications précédentes, **caractérisé par le fait que** les orifices de liaison (11) présentent une réalisation cylindrique à diamètres identiques ou différents, et/ou sont conçus avec amenuisement, notamment avec amenuisement tronconique, et/ou avec forme étagée, et/ou en tant que trou oblong.

5. Ensemble selon l'une des revendications précédentes, **caractérisé par le fait qu'**un axe médian (51, 52) des orifices de liaison (11) est agencé suivant un angle (α1, α2) inférieur à 90°, mesurant notamment de 45° à 65° et, de préférence, environ 55° par rapport à une tangente T au pourtour extérieur de la bague de support (5).

6. Ensemble selon la revendication 5, **caractérisé par le fait que** les axes médians (51, 52) de deux orifices de liaison voisins définissent un angle β mesurant environ 90°.

7. Ensemble selon la revendication 6, **caractérisé par le fait que** deux orifices de liaison (11) voisins se coupent mutuellement sur une surface (5b) de l'enveloppe intérieure de la bague de support (5).

8. Ensemble selon l'une des revendications précédentes, comprenant par ailleurs une rainure (12) prévue sur une surface (5c) de l'enveloppe extérieure de la bague de support (5), et raccordant les orifices de liaison (11) sur ladite surface de l'enveloppe extérieure de ladite bague de support (5).

9. Ensemble selon l'une des revendications précédentes, comprenant par ailleurs une bague de coincement (7) occupant un emplacement radial à l'intérieur du coussinet (6) de l'arbre.

10. Ensemble selon l'une des revendications précédentes, **caractérisé par le fait que** la bague de support (5) est plus longue que le coussinet (6) de l'arbre dans la direction axiale (X-X).

11. Ensemble selon l'une des revendications précédentes, **caractérisé par le fait que** la bague de glissement (2) rotative, le coussinet (6) de l'arbre, la bague de support (5), et les première et seconde bagues toriques (8, 9), forment un groupe structurel apte au préassemblage.

12. Procédé d'utilisation d'un ensemble d'étanchement à bagues de glissement, conforme à l'une des revendications précédentes.
